(19)

Europäisches
Patentamt
European
Patent Office
Office européen
des brevets

(11)  **EP 4 231 206 A1**

(12)  **EUROPEAN PATENT APPLICATION**

(43) Date of publication:
     **23.08.2023  Bulletin 2023/34**

(51) International Patent Classification (IPC):
     **G06N 10/60** (2022.01)

(21) Application number: **22157100.3**

(52) Cooperative Patent Classification (CPC):
     **G06N 10/60**

(22) Date of filing: **16.02.2022**

(84) Designated Contracting States:
     **AL AT BE BG CH CY CZ DE DK EE ES FI FR GB
     GR HR HU IE IS IT LI LT LU LV MC MK MT NL NO
     PL PT RO RS SE SI SK SM TR**
     Designated Extension States:
     **BA ME**
     Designated Validation States:
     **KH MA MD TN**

(71) Applicants:
     • **TOYOTA JIDOSHA KABUSHIKI KAISHA
       Toyota-shi, Aichi-ken, 471-8571 (JP)**
     • **ETH Zurich - The Swiss Federal Institute of
       Technology Zurich
       8092 Zurich (CH)**

(72) Inventors:
     • **ABBELOOS, Wim
       1140 Brussels (BE)**

     • **ZÄCH, Jan-Nico
       8092 Zurich (CH)**
     • **LINIGER, Alexander
       8092 Zurich (CH)**
     • **DANELLJAN, Martin
       8092 Zurich (CH)**
     • **DAI, Dengxin
       8092 Zurich (CH)**
     • **VAN GOOL, Luc
       8092 Zurich (CH)**

(74) Representative: **Cabinet Beau de Loménie
     158, rue de l'Université
     75340 Paris Cedex 07 (FR)**

Remarks:
     Amended claims in accordance with Rule 137(2)
     EPC.

(54)  **METHOD FOR MULTI OBJECT TRACKING WITH QUANTUM ADIABATIC COMPUTING**

(57)  A computer-implemented method for grouping detected objects ($O_1$-$O_D$) such that a group ($Gr_t$) comprises detected objects ($O_d$) corresponding to a given type of object, a said detected object ($O_d$) being on a frame ($F_i$) belonging to a sequence of frames ($F_1$-$F_N$), said method consisting in determining values ($Oval$) of assignments ($As_{11}$-$As_{DG}$) of said detected objects ($O_1$-$O_D$) to said groups ($Gr_1$-$Gr_G$), said method comprising the following steps:
- obtaining (EOC), for each pair of detected objects ($O_{di}$, $O_{dj}$), a similarity score ($Sim_{didj}$);
- determining (EDQ), based on said similarity scores ($Sim_{didj}$), an objective function (QCF) quadratic with respect to said assignments;
- evaluating (EOp) values of said assignments, said evaluating step comprising the following substeps:
(i) obtaining (EOp10), using a quantum annealing solver (QAS), an estimated solution (Sol) of an unconstrained binary quadratic optimization problem (QUBO) corresponding to said objective function (QCF);
(ii) post-processing (EOp20) said estimated solution (Sol) to obtain said values (Oval) of assignments ($AS_{11}$-$As_{DG}$).

[Fig.5]

**Description**

**Background of the disclosure**

The invention is in the field of object detection. In particular, it relates to a method for tracking multiple objects detected on a sequence of frames.

Multiple objects tracking (MOT) describes the problem of tracking all objects belonging to a predefined set of object types in 2D or 3D. Existing MOT methods follow a tracking by detection approach, where a set of detected objects is given in every frame and the MOT methods assign each detection of an object to a track id.

Two major groups of assignment approaches exist. The first one uses machine learning and simple heuristics to resolve the remaining inconsistencies.

The second group directly performs assignments using discrete optimization algorithms. These formulations allow including long-term relations and are more transparent than the machine learning based methods.

Nevertheless, discrete optimization algorithms generally no longer become feasible when the problem size increases since they require computational means which grow exponentially with the number of objects to be tracked and the number of frames. In other words, solving the assignment problem as a discrete optimization problem is not scalable with the number of objects and frames. As a consequence, the number of frames and objects that such solving methods can handle are limited to a few.

The invention aims to circumvent the drawbacks of state of the art, notably those previously mentioned.

**Purpose and summary of the invention**

Thus, and according to a first aspect, the invention relates to computer-implemented method for grouping detected objects such that a group comprises detected objects corresponding to a given type of object, a said detected object being on a frame belonging to a sequence of frames, said method consisting in determining values of assignments of said detected objects to said groups, a said assignment being a Boolean variable indicating if a detected object belongs to a group, said method comprising the following steps:

- obtaining, for each pair of detected objects respectively detected on different frames, a similarity score representative of visual and/or spatial correlations between detected objects of said pair;
- determining, based on said similarity scores, an objective function quadratic with respect to said assignments, an optimization of said objective function corresponding to maximizing a combination of similarity scores between detected objects assigned to a same said group;
- evaluating values of said assignments, said evaluating step comprising the following substeps:

    (i) obtaining, using an annealing solver, an estimated solution of an unconstrained binary quadratic optimization problem corresponding to said objective function;
    (ii) post-processing said estimated solution to obtain said values of assignments;

- gathering, in at least one group, detected objects according to said values of assignments of these detected objects to this group.

Correspondingly, the invention also proposes a device for grouping detected objects such that a group comprises detected objects corresponding to a given type of object, a said detected object being detected on a frame belonging to a sequence of frames, said method consisting in determining values of assignments of said detected objects to said groups, a said assignment being a Boolean variable indicating if a detected object belongs to a group, said device comprising:

- a module for obtaining, for each pair of detected objects respectively detected on different frames, a similarity score representative of visual and/or spatial correlations between detected objects of said pair;
- a module for determining based on said similarity scores, an objective function quadratic with respect to said assignments, an optimization of said objective function corresponding to maximizing a combination of similarity scores between detected objects assigned to a same said group;
- a module for evaluating said assignments, said evaluating module comprising the following submodules:

    (i) a submodule for obtaining using an annealing solver, an estimated solution of an unconstrained binary quadratic optimization problem corresponding to said objective function;
    (ii) a submodule for post-processing said estimated solution to obtain said values of assignments;

- a module for gathering, in at least one group, detected objects according to said values of assignments of these detected objects to this group.

Thus, and in general, the invention aims to provide a method for grouping objects detected on several images, the detected objects of each group corresponding to a same type of object. For instance a given type of object can be: persons, cars, cats etc. A given type of object can also represent more precise visual features, for instance: red cars, buildings with specific design etc.

In particular embodiments, a given type of object corresponds to a unique object. For instance, in a sequence of images, a same car can be detected on each of these images. Each detection of this car on a given image corresponds to a distinct detected object but to the same physical object. Such an embodiment enables to identify these detected cars to the same car.

The method uses similarities between objects detected on different images, and assignments of these detected objects to distinct groups, each assignment being a Boolean variable.

For instance, if an assignment of a detected object to a group has a value equal to 1, it means that this detected object is assigned to this group. Otherwise, if an assignment of a detected object to a group has a value equal to 0, it means that this detected object is not assigned to this group.

By definition, a combination of similarity scores between detected objects jointly assigned a same group directly depends on the assignments.

In some embodiments, such a combination is a sum of similarity scores, without being limitative to the invention. For instance, such a combination can be a sum of squared similarity scores, or a weighted sum of similarity scores etc.

As explained below, maximizing such a combination of similarity scores enables to gather detected objects into groups respectively corresponding to distinct types of objects. In other words, it enables to identify certain objects appearing in different frames as belonging to a given type of object.

The optimisation of a function, namely the objective function, means maximising or minimising this function.

Depending on a positive or negative prefactor, the maximization or the minimization of the objective function respectively corresponds to the maximization of the combination of similarity scores. Indeed, a nonzero term of this objective function corresponds to a similarity score between two detected objects assigned to a same group and belonging to different frames.

The objective function is quadratic with respect to assignments, which means that it does not comprise any term which is a product of three or more assignments. The objective function thus comprises terms that are products between two assignments, terms that are linear with respect to assignments, or constant terms.

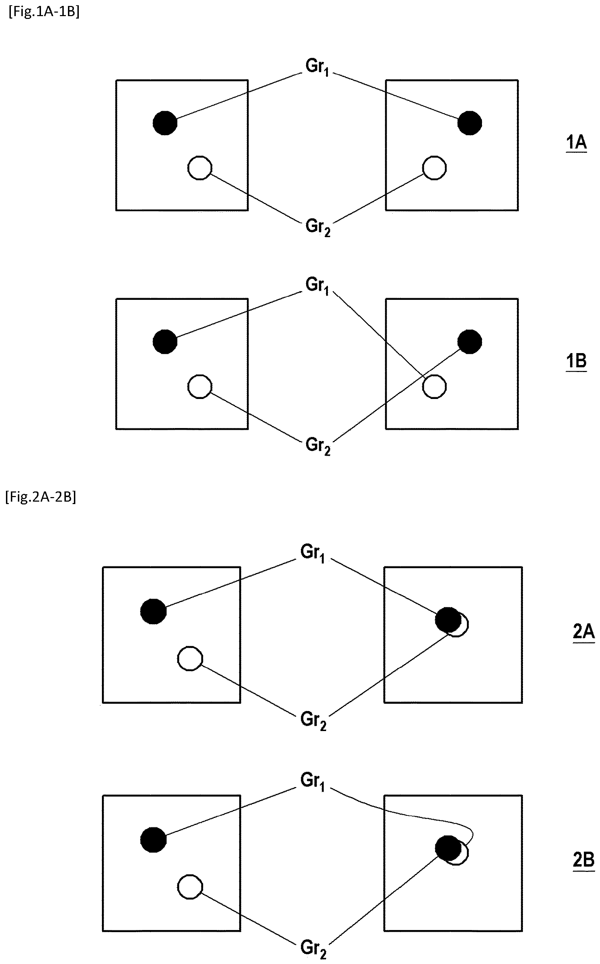

For illustrative purposes, and without limiting the scope of the invention, figure 1 represents a simplified multi-object tracking problem solved with assignments, with two subsequent frames and two detected objects on each frame. Lines linking detected objects and groups represent assignments with values equal to one. On figure 1A, the detected dark spheres are assigned to a same group and the detected white spheres are assigned to another group. On figure 1B, a group is erroneously assigned to a dark and a white spheres and the other group is assigned to the remaining spheres.

In this example, there are two given types of object, each corresponding to a distinct sphere.

In this case, it is simple to see that the two dark spheres correspond to the same physical object on one side, and that the two white spheres correspond to another unique physical object on the other side. Thus the solution to this multi object tracking problem corresponds to figure 1A.

This result can be deduced by maximising the sum of similarities of detected objects to each group, assuming that the similarity between two detected spheres of the same color is bigger than the similarity between two spheres of different colors. For the sake of example, these similarities have values respectively close to 1 and close to -1. In this case, the sum of similarities of detected object assigned to the same group is close to 2 in figure 1A, and close to -2 in figure 1B. The choice of assignment corresponding to the highest sum of similarities thus corresponds to the solution of the problem.

In some cases, as in figure 2, the similarity between two different detected objects (the white and dark spheres) may be close to the similarity between two identical detected objects (the dark sphere detected on each image), making it more difficult to obtain the ideal choice of assignments when only two subsequent frames are taken into account. This is namely the case when objects overlap in one or more images.

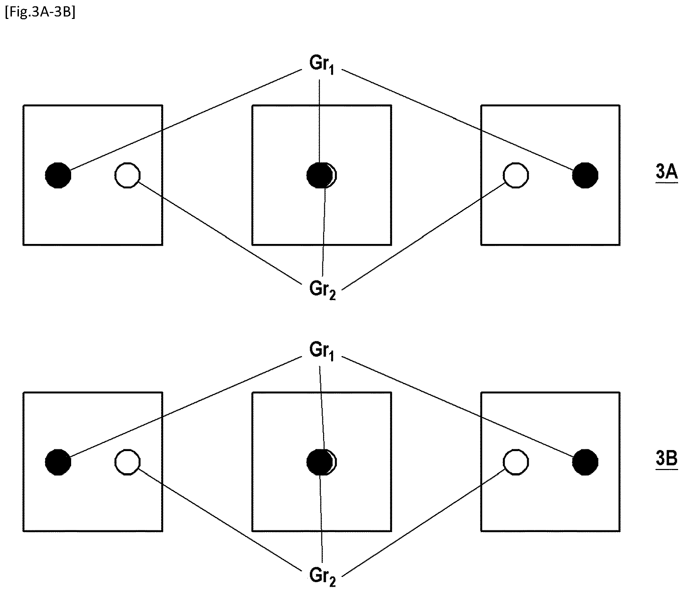

The method according to the invention enables to better distinguish the ideal values of assignments by taking more subsequent images into account, as in figure 3. Indeed, taking more subsequent images into account increases the difference between sums of similarities corresponding to different choices of assignments.

Since assignments are discrete variables, finding their values which minimize or maximize the objective function is a discrete optimization problem. Such a problem belongs to the class of NP hard problems and is hard to solve with classical solver. In particular, the computational cost and memory required for determining such values on a standard solver grows very quickly with the number of possible assignments. In the present application, a standard solver refers to a solver executed on a standard computer architecture containing generic informatics means.

The invention proposes to leverage an annealing solver to determine the optimal values of assignments, with a computational cost which grows much more slowly with the number of possible assignments than with a standard solver, making the assignment problem tractable.

An annealing solver is a device implementing an annealing process and is designed to solve discrete optimization problems. An annealing process corresponds to an evolution of a physical system to reach its equilibrium, given the couplings between the physical components of the system. Generally, this equilibrium corresponds to a configuration of the components that minimizes the total energy of the system. In order to solve a discrete optimization problem, the couplings between the components are configured according to this optimization problem and the configuration of the system at equilibrium corresponds or is likely to correspond to the optimal solution of the problem.

If the computational cost for solving the assignment problem grows too quickly, as with a standard solver, the solving can quickly become unrealisable because of the unrealistic required computational means it can reach.

In order to solve the assignment problem in a tractable way, the task of optimizing the objective function is mapped to an unconstrained binary quadratic optimization (QUBO) problem, which can be solved with an annealing solver much more efficiently than with a standard solver. Hence, the invention allows solving this assignment problem in a way that is tractable as the number of frames and/or the number of detected objects increase.

Advantageously, solving this assignment problem in a tractable way allows increasing the number of frames and thus allows improving reliability. It also allows increasing the number of detected objects to be assigned to a group in each frame.

To further increase the number of frames as well as the number of detected objects in each frame, the invention proposes to leverage the properties of quantum adiabatic computation.

Hence, according to a particular embodiment of the method, the annealing solver is a quantum annealing solver.

A quantum annealing solver is a device implementing quantum adiabatic computation which is designed to solve particular types of problems, namely QUBO problems.

The QUBO problem solved by the quantum annealing solver is a minimization problem, which corresponds to the minimization of the energy of a quantum system. More precisely, it corresponds to the minimization of the energy of a system of qubits coupled according to the QUBO problem.

Such a system of coupled qubits presents several states with discrete levels of energy. A measure of the state of the system with the lowest energy yields the solution of the QUBO problem. The lowest energy state is called the ground state of the system.

To solve the QUBO problem, the quantum annealing solver first initializes the couplings between qubits according to an initial configuration, such that the system is in its ground state with a high probability.

Then, these couplings are evolved such that they finally correspond to the couplings according to the QUBO problem. During the evolution of the couplings, the state of the qubits system evolves accordingly, and stays in a ground state as long as the state was initially a ground state and that the evolution is slow enough. This step of the solving is called adiabatic quantum annealing.

Consequently, at the end of this evolution, the state of the qubits system has a high probability to be in the ground state. Thus the probability is high that measuring this state yields the optimal solution of the QUBO problem.

It is important to notice that the evolution of the system initially in the ground state depends on the energy gap between this ground state and the higher energy states. Namely, increasing this gap lowers the probability for the qubit system to jump from the ground state to a higher energy state. Hence, increasing this gap improves the probability of the system to be in the ground state at the end of the quantum annealing phase, and thus improves the probability to measure the optimal solution of the QUBO problem.

This process of initialization and annealing can be repeated several times in order to increase the probability to obtain the optimal solution of the QUBO problem with the highest probability. Indeed, if this process is repeated several times and several measures are performed, the state which has the lowest energy among states obtained after each iteration of annealing is more likely to correspond to the optimal solution.

Thanks to the entanglement of the qubits of the system, these evolve simultaneously. Hence the duration of solving the QUBO problem is limited by the time required by the adiabatic quantum annealing phase, which grows slowly with the number of qubits.

As a consequence, the computation time required to solve the assignment problem with a quantum annealing solver, and according to the invention, grows slowly with respect to the number of assignments, whereas it grows much more quickly when solved on a classical computer.

Consequently, the invention proposes a method which, on one side, has the advantages of a discrete optimization algorithm, allowing including long-term relations and being more transparent than deep-learning methods, and on the other side is scalable with the number of detected objects and frames.

More details about the solving the QUBO problem via quantum annealing can be found in the following document: ["Quantum annealing learning search for solving QUBO problems", Pastorello, Davide and Blanzieri, Enrico, 2019, arXiv:1810.09342].

According to a particular embodiment of the method, constraints on said assignments are included in said unconstrained binary quadratic optimization problem, said constraints indicating that each said detected object has to be assigned either to a single group among said groups or to a set of false positive detections.

Thus, this embodiment allows including constraints in the QUBO problem. This enables to restrain the values of assignments obtained with the method to values which respect constraints as described below.

According to the constraints described in this embodiment, a detected object cannot be assigned to several groups. This constraint enables to unambiguously identify each detected object with a group.

The embodiment introduces a set of false positive detections. This set is not a group corresponding to a given type of objects.

If a detected object is not assigned to any group, the invention proposes to use the set of false positive detections to which this detected object has to be assigned if the constraints are fulfilled. This enables to manage false positive detections (i.e. a detection of an object at a given position on a frame, whereas there is actually no object located at this given position in the frame) by assigning them to this set.

An inclusion of constraints in the QUBO problem is a modification of the QUBO problem, such modification aiming that the assignments values corresponding to the estimated solution of the QUBO problem fulfil these constraints.

The inclusion of constraints in the QUBO problem does not change the "unconstrained" aspect of the QUBO. In other words, the above described embodiment proposes to include contraints while keeping the QUBO problem a discrete optimization problem, which is crucial for the resolution of the QUBO problem by the annealing solver.

According to a particular embodiment of the method, constraints on said assignments are included in said QUBO problem, said constraints indicating that for each said group, and for each said frame, either a single detected object in this frame among said detected objects or a dummy detection has to be assigned to this group.

According to the constraints described in this embodiment, a group cannot be assigned to more than one detected object in an image. This constraint enables to identify each group with a unique type of object. This is particularly adapted when each given type of object correspond to a distinct and unique physical object. In this case, this constraint enables to identify each group with a unique physical object.

If a group is not assigned to any detected object in an image, the invention proposes to use a dummy detection to which this group has to be assigned. Namely, this enables to manage a group which is inactive on a frame (i.e. when no object corresponding to the type of object identified with this group is detected on the frame).

Constraints as described from both precedent embodiments can be combined in a particular embodiment of the method.

In this case, if a frame contains the same number of detected objects than there are groups, the constraints require that each group is assigned to a single detected object in this image and vice versa.

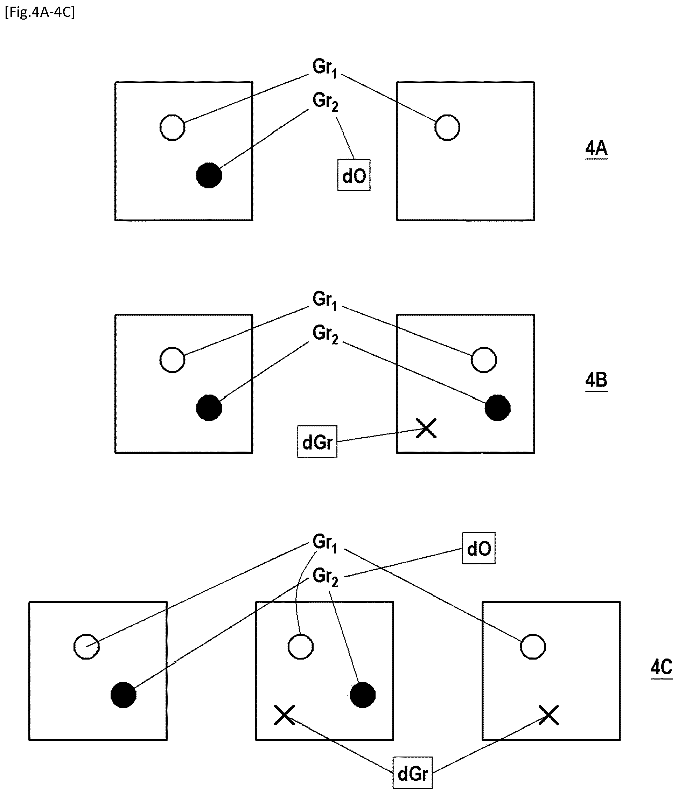

Figure 4 represents simple cases where a dummy detection or a set of false positive detections are used, and assignments respect the constraints from both precedent embodiments. Each of figure 4A, figure 4B and figure 4C respectively represent a unique example of assignments respecting the constraints according to both precedent embodiments.

Figure 4A represents a case wherein one object disappears in the second frame. In this case, the group $Gr_2$ can be assigned to a dummy detection (represented as dO in the figure). In another example, the constraints would also allow assigning the group $Gr_1$ to the dummy detection instead of the white sphere of second frame, and assigning this white sphere to the group $Gr_2$, for instance.

Figure 4B represents a case wherein an additional detected object (represented as a cross) is on the second frame whereas there are only two groups $Gr_1$ and $Gr_2$. In this case, this additional detected object can be assigned to a set of false positive detections (represented as dGr in the figure).

Figure 4C represents a case wherein a dummy detection and a set of false positive detections are used.

According to a particular embodiment of the method, said constraints are included in said QUBO problem with following substeps of said evaluating step:

- determining a modified objective function by adding, to said objective function, a constraint term representative of said constraints, said constraint term being quadratic with respect to assignments and proportional to at least one Lagrange multiplier associated with at least one constraint; and
- generating said unconstrained binary quadratic optimization problem from said modified objective function;

The embodiment enables to modify the objective function such that the optimization of the obtained modified objective function corresponds advantageously to perform conjointly:

- a maximization of a combination of similarity scores between detected objects assigned to a same group, and
- a minimization of the violation of the constraints by the assignments.

The embodiment proposes to include the constraints in the QUBO problem by first adding a term representing the constraints in the objective function. Since this term is quadratic with respect to the assignments, the modified objective function is still quadratic with respect to the assignments. This enables to generate the QUBO problem from this modified objective function.

A Lagrange multiplier is a variable which quantifies the weight of the constraint associated to him in the modified objective function. Their values can be chosen constant or can be iteratively updated as in particular embodiments described below.

Thanks to the constraint term, the optimization of the modified objective function corresponds to both:

- maximizing a combination of similarity scores between detected objects assigned to a same group, and
- minimizing the violation of the constraints by the assignments.

According to a particular embodiment of the method, the objective function is:

$$C = x^T Q x + c x$$

where x is a vector containing said assignments, Q is a matrix containing similarity scores, and c is a bias vector; and wherein said modified objective function is:

$$C' = x^T Q' x + b x$$

where $Q' = Q + \sum_i \lambda_i G_i^T G_i$ and $b = c - 2\sum_i \lambda_i d_i G_i G_i$ and $d_i$ being respectively a vector and a number such that $i^{th}$ constraint is $G_i x = d_i$, $\lambda_i$ being a said Lagrange multiplier associated with the $i^{th}$ constraint;

In the above equations:

- $bx$ is a scalar product between $b$ and $x$;
- $cx$ is a scalar product between $b$ and $x$;
- $Qx$ is a matrix multiplication of the vector $x$ by the matrix $Q$;
- $x^T Q x$ is a scalar product between $x$ and $Qx$;
- $G_i x$ is a scalar product between $G_i$ and $x$; and
- $x^T G_i^T G_i x$ is an equivalent notation for $(G_i x)^2$.
- the exponent T corresponds to the transpose operation.

The matrix $Q$ can be a sparse matrix, i.e. most of its entries are zero, which advantageously enables to significatively reduce the memory required to store this matrix on an electronic device.

Indeed, since the objective function corresponds, for each group, to a sum of similarity scores between detected objects assigned to this group, the only nonzero values of matrix $Q$ are the one that couples assignments of detected objects to a same group.

The term $cx$ in the objective function corresponds to a bias in the objective function. Such a term can cause some assignments values of the optimal solution to be equal to one, or cause some assignments values to be zero, depending on the values of the components of c. The vector c can be chosen equal to zero, in which case the objective function has no bias term. An objective function without bias term will be chosen in the subsequent examples.

For the sake of illustration, an objective function corresponding to the problem represented in figure 1 is constructed as followed.

Four detected objects numerated 1,2,3 and 4 can be assigned to two different groups $Gr_1$ and $Gr_2$. One can construct a vector x comprising these assignments:

$$x = (x_{11}, x_{21}, x_{31}, x_{41}, x_{12}, x_{22}, x_{32}, x_{42}) \quad (1)$$

where a value $x_{ij}$ is the assignment of the object i to the group $Gr_j$. For sake of simplicity, No set of false positives or the dummy detection is taken into account in this example. Taking into account these would require a vector x with 15 components in this case. Also notice that a similarity score between a dummy detection and a detected object can for instance be chosen equal to zero, such that assignments of dummy detections do not contributes to the value of the objective function.

Then the matrix $Q$ can be

$$Q = - \begin{pmatrix} 0 & 0 & q_{13} & q_{14} & 0 & 0 & 0 & 0 \\ 0 & 0 & q_{23} & q_{24} & 0 & 0 & 0 & 0 \\ 0 & 0 & 0 & 0 & 0 & 0 & 0 & 0 \\ 0 & 0 & 0 & 0 & 0 & 0 & 0 & 0 \\ 0 & 0 & 0 & 0 & 0 & 0 & q_{13} & q_{14} \\ 0 & 0 & 0 & 0 & 0 & 0 & q_{23} & q_{24} \\ 0 & 0 & 0 & 0 & 0 & 0 & 0 & 0 \\ 0 & 0 & 0 & 0 & 0 & 0 & 0 & 0 \end{pmatrix} \quad (2)$$

Where a value $q_{ij}$ is the similarity between detected object i and detected object j. The entries of $Q$ corresponding to detected objects of the same frame are null. Also, the matrix $Q$ comprises a minus sign such that the minimization of the objective function C corresponds to maximizing sums of similarities. In this case, the Lagrange multipliers are positive.

A different choice for the form of the matrix can be made. For instant, in some embodiments, the matrix $Q$ is symmetric.

The choice of values for assignments according to figure 1A is

$$x = (1, 0, 1, 0, 0, 1, 0, 1) \quad (3)$$

for which the objective function takes the value C = $-q_{13} - q_{24} \cong$ -2. This follows the assumption that $q_{13} \cong q_{24} \cong 1$, previously chosen as an example. This assumption is justified by the fact that detected objects 1 and 3 (the dark spheres) are very similar, as well as the detected objects 2 and 4 (the white spheres).

The choice of values for assignment according to figure 1B is

$$x = (1, 0, 0, 1, 0, 1, 1, 0) \quad (4)$$

for which the objective function takes the value C = $-q_{14} - q_{23} \cong$ 2 This assumption, also chosen as an example, is justified by the fact that the detected objects of different colors are very dissimilar.

The assignments configuration in figures 1A and 1B respect the constraints. Nevertheless, an assignments configuration which does not respect the constraints, such as

$$x = (1, 1, 1, 0, 0, 1, 0, 1) \quad (5)$$

yields the same value of the objective function as the values of assignments corresponding to figure 1A. Hence, the objective function C does not enable to choose between these two assignments configurations. On the other hand, the modified objective function is minimised only by the assignments configuration of figure 1A.

The constraints that any given detected object is assigned to a unique group correspond to four distinct constraints. Namely, the constraint that object 1 is assigned to only one group can be translated by $G_1x = d_1$ where $d_1 = 1$ and $G_1 = (1,0,0,0,1,0,0,0)$. (6)

The constraints that, on a given frame, any given group is assigned to a unique detected object correspond to four additional distinct constraints. Namely, the constraint that group Gr$_1$ is assigned to only one detected object on the first frame can be translated by $G_2x = d_2$ where

$$d_2 = 1 \text{ and } G_2 = (1, 1, 0, 0, 0, 0, 0, 0). \quad (7)$$

The constraint $G_2x = 1$ corresponds to a term $\lambda_2((G_2x)^2 - 2G_2x)$ in the modified objective function. If $x = (1,0,1,0,0,1,0,1)$, which corresponds to the assignments configuration in figure 1A, this term is equal to $-\lambda_i$. If $x = (1,1,1,0,0,1,0,1)$, which does not respect the constraint, this term is equal to $2\lambda_i$. Consequently, the modified objective function takes a lower value for the assignments configuration corresponding to figure 1A.

In this example, the fact that any violation of a constraint increases the value of the modified objective function is due to the quadratic form of the constraint term. If a plus sign was in front of $Q$, as in a different example, any violation of a constraint would decreases the value of modified objective function. In both example, a violation of the constraint is counterproductive to the optimization of the modified objective function.

Consequently, the optimization of the modified objective function leads to more reliable assignments than the optimization of the objective function.

In another example, the matrix $Q$ does not comprise a minus sign, such that the maximization of the objective function C corresponds to maximizing sums of similarities. In this case, the Lagrange multipliers are negative.

In particular embodiments, a same constant value can be attributed to the Lagrange multipliers.

According to a particular embodiment of the invention, the method is characterized in that:

- several iterations of said evaluating step are performed;
  and wherein a nonterminal current iteration of the evaluating step comprises the following substeps:
- estimating, for at least a given said constraint, a variation ($cr_i$) of the objective function caused by a violation of this constraint by said values of assignments obtained in the post-processing substep of said current iteration;
- updating at least a said Lagrange multiplier with said variation caused by the violation of the constraint associated with this Lagrange multiplier.

The embodiment proposes to iteratively update the values of the Lagrange multipliers.

Such iterative updates of the Lagrange multipliers advantageously enable to improve the precision of the method.

In a given nonterminal iteration of the evaluating step, after that values of assignments are obtained from the post processing substep of the current iteration, the embodiment proposes to estimate a variation of the objective function caused by assignments not fulfilling a constraint.

Since the constraint term in the modified objective function is quadratic with respect to assignments, this variation has always the same sign given the form of the objective function. Namely, if the modified objective function has to be maximized, the variation is always positive, or null if the constraint is fulfilled. Inversely, if the modified objective function has to be minimized, the variation is always negative or null.

An updating of a Lagrange multiplier associated with the constraint causing this variation can contribute to the optimization of the modified objective function.

Using such updates yield estimated solutions equal to the optimal solution with a higher probability.

According to a particular embodiment of the method, the updating of at least a said Lagrange multiplier comprises an addition of a constant to said Lagrange multiplier.

This embodiment thus proposes, in addition to the modification of one or more Lagrange multipliers with variations of the modified objective function, to add a constant to each of these Lagrange multipliers.

This constant added to the Lagrange multipliers enables to assure that subsequently obtained estimated solutions fulfil the constraints.

This constant can generally be small compared to the values of the Lagrange multipliers.

According to particular embodiments:

- during at least one nonterminal iteration of the evaluating step, at least one intermediate value associated to a said constraint is fixed equal to the Lagrange multiplier associated to said constraint;
- the substep of updating in the penultimate iteration of evaluating step comprises the determination of the Lagrange multiplier associated to a said constraint as the intermediate value which has the largest modulus, among said at least one intermediate values obtained during at least one nonterminal iteration and associated to said constraint.

This embodiment advantageously allows obtaining more reliable values of assignments.

The intermediate values correspond to values of the Lagrange multiplier obtained after updating steps of some iterations of the evaluating step.

In a particular embodiment, these iterations can be among the last nonterminal iterations of the evaluating step. This enables to determine a value of the Lagrange multiplier with the largest modulus among values of Lagrange multipliers leading to the estimated solutions which are the closest to the optimal solution of the QUBO problem.

Advantageously, in an embodiment where the annealing solver is a quantum annealing solver, increasing the modulus of the Lagrange multipliers causes an increase in the energy gap between the ground state of the qubits system corresponding to the QUBO problem and higher energy states.

The choice of the value of Lagrange multiplier with the largest modulus allows ensuring that the ground state of the qubits system corresponding to the QUBO problem has a sufficiently high gap in energy with respect to higher energy states. Such a sufficiently high gap in energy enables the quantum annealing solver to yield the optimal solution of the QUBO problem with a high probability, as explained above.

Consequently, the values of assignments obtained from the estimated solution of the QUBO problem during the last iteration of the evaluating step are more reliable.

According to a particular embodiment of the method, the substep of updating, in the penultimate iteration of evaluating step, comprises the addition of an offset to said Lagrange multiplier.

This embodiment proposes to add an offset to Lagrange multiplier in their last updating.

Such an offset can ensure the modulus of the value of the Lagrange multipliers to be sufficiently high, hence increasing the probability to measure the optimal solution of the QUBO problem, for the same reason as explained above.

According to a particular embodiment of the method:

- during a given iteration of the evaluating step, a said variation is proportional to:

$$v_i = (G_i \mathrm{o} x_t)^T Q x_t - \min\{(G_i \mathrm{o} x_t)\mathrm{o}(Q x_t)\}$$

where $x_t$ is a vector containing the values of assignments obtained in the post-processing step during said iteration and $\min\{(G_i \mathrm{o} x_t)\mathrm{o}(Q x_t)\}$ is the smallest element of vector $(G_i \mathrm{o} x_t)\mathrm{o}(Q x_t)$; and wherein
- said updating of the Lagrange multiplier associated with the constraint which caused said variation comprises subtracting a quantity proportional to $2\, v_i/(G_i x_t - d_i)^2$ from this Lagrange multiplier.

The notation "o" refers to an elementwise product between two vectors. For instance, $(G_i \mathrm{o} x_t)$ is a vector whose $n^{th}$ component is the product between the respective $n^{th}$ components of $G_i$ and $x_t$.

According to a particular embodiment of the method, said similarity scores are determined with a neural network.

A neural network can be trained to infer similarity scores between two detected objects on a frame. Moreover, it can be trained to infer visual similarity and spatial similarities between two detected objects, and also trained to combine those too visual similarity score in a global similarity score. For implementing such use of a neural network, the one skilled in the art can consult the document ["An Efficient Approximate Solver for Lifted Disjoint Paths.", Andrea Hornakova et al, Proceedings of the IEEE/CVF International Conference on Computer Vision (ICCV), page 11, 2021.].

According to a particular embodiment of the method, said annealing solver is simulated.

The invention provides a system comprising a device according to the invention and an annealing solver.

The device and the annealing solver of this system can be connected with an offline interface or via an online interface. For instance, an online connection can be realized via a server and be a remote connection.

The invention provides a computer program comprising instructions for performing the steps of the method according to any of the above-described embodiments.

It should be noted that the computer programs referred to in this paper may use any programming language, and be in the form of source code, object code, or code intermediate between source code and object code, such as in a partially compiled form, or in any other desirable form.

The invention provides storage medium, readable by computer equipment, of a computer program comprising instructions for executing the steps of the determination method according to one of the embodiments described above.

The storage media referred to in this statement may be any entity or device capable of storing the program and being played by any computer equipment, including a computer.

For example, the medium may include a storage medium, or a magnetic storage medium, such as a hard drive.

Alternatively, the storage media may correspond to a computer integrated circuit in which the program is incorporated, and adapted to execute a method as described above or to be used in the execution of such method.

**Brief description of the figures**

Further features and advantages of the present invention will be apparent from the description below, with reference to the attached drawings which illustrate non-limiting embodiments thereof.

[Fig. 1] Figure 1 represents a first illustrative example of assignments.

[Fig. 2] Figure 2 represents a second illustrative example of assignments.

[Fig. 3] Figure 3 represents a third illustrative example of assignments.

[Fig. 4] Figure 4 represents a fourth illustrative example of assignments.

[Fig. 5] Figure 5 represents first embodiment of a method according to the invention.

[Fig. 6] Figure 6 represents a first embodiment of a device according to the invention.

[Fig. 7] Figure 7 represents a second embodiment of a method according to the invention.

[Fig. 8] Figure 8 represents a second embodiment of a device according to the invention.

[Fig. 9] Figure 9 represents a third embodiment of a method according to the invention.

[Fig. 10] Figure 10 represents a third embodiment of a device according to the invention.

[Fig. 11] Figure 11 represents a particular embodiment of the updating substep according to the invention.

[Fig. 12] Figure 12 represents a system according to the invention.

[Fig. 13] Figure 13 represents the hardware architecture of a device in accordance with a particular embodiment of the invention.

## Description of particular embodiments of the invention

Several embodiments of the invention will now be described. Generally speaking and as previously mentioned, the invention provides a computer-implemented method for grouping detected objects $O_1$-$O_D$, each group corresponding to a given type of object.

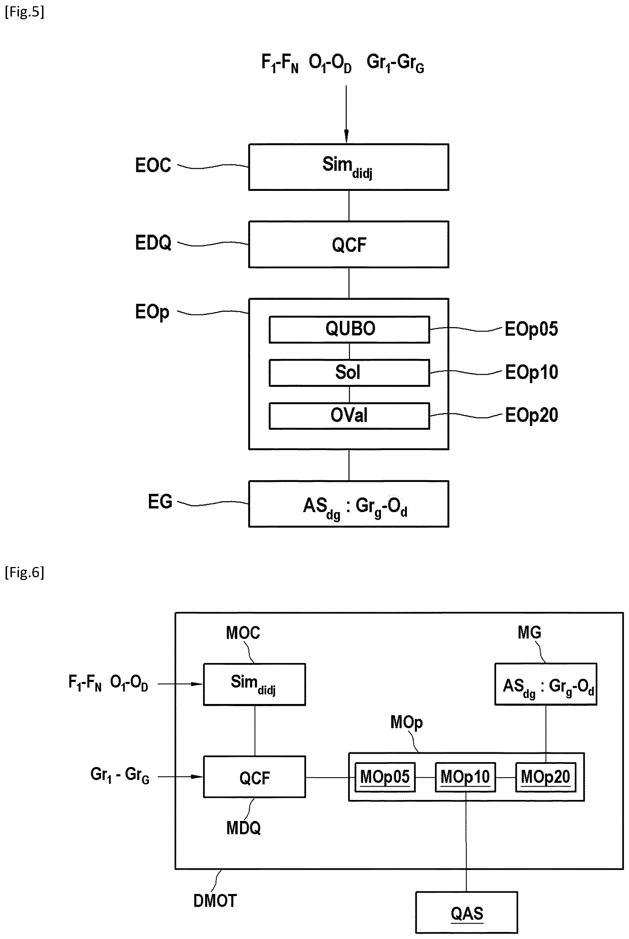

Figure 5 represents the main steps of a method for grouping detected objects according to a first embodiment of the invention.

The grouping is done by determining assignments of detected object to group, such that the set of pairs of detected objects assigned to a same group have the highest similarity scores possible, or have the highest combination of similarity scores for each pair.

An assignment $As_{dg}$ is a Boolean variable associated to a detected $O_d$ and a group $Gr_g$. The assignment $As_{dg}$ indicates if the detected object $O_d$ is assigned to the group $Gr_g$.

This assignment is transcribed as a QUBO problem. In this embodiment, the QUBO problem is then solved with a quantum annealing solver QAS.

In another embodiment, the QUBO problem is solved with a digital annealing solver. An example of such a device is the DAU (Digital Annealing Unit) from Fujitsu.

A sequence of frames $F_1$-$F_N$ is obtained as well as detected objects on each frame. For instance, a frame can be a bidimensional or a tridimensional image, a point cloud etc. The detected objects can be determined with a module for object detection. For instance, such a module can be a trained detection neural network.

A detected object does not always correspond to a physical object on the frame. Namely, if the detected objects are determined with a module for object detection, a portion of them can correspond to false positive detections if the module is not perfectly precise.

Each detected object is unique, but two detected objects belonging to different frames can correspond to a same real object.

During a step EOC, similarity scores between detected objects of different frames are obtained. A similarity score between two detected objects is representative of visual and/or spatial correlations between these detected objects. For instance, if two detected objects have close positions and looks similar, they receive a high similarity score; if they have further positions and looks different, they receive a low similarity score. The similarity score can be normalized such that it takes value between minus one and one.

In a particular example, the similarity score between two detected objects is a weighted sum of a visual similarity and a spatial similarity.

The spatial similarity can be the distance between respective positions of the detected objects.

The visual similarity can be a distance between visual features extracted from each region of the frames respectively corresponding to each detected object. Such visual features can be outputs of a neural network, such as a trained DG-Net or ResNet.

In another example, the spatial and visual similarities are combined into a similarity score via a neural network such as a multi-layer perceptron. A method corresponding to such an example is detailed in the document ["An Efficient Approximate Solver for Lifted Disjoint Paths.", Andrea Hornakova et al, Proceedings of the IEEE/CVF International Conference on Computer Vision (ICCV), page 11, 2021.].

In another embodiment, the similarity scores correspond only to spatial similarities. This can namely be used when the frames display point clouds, such as point clouds acquired with a LiDAR system.

Figure 5 represents a step EDQ, wherein an objective function QCF is generated from the similarity scores $Sim_{didj}$ determined in the step EOC. This objective function QCF is quadratic in the assignments $As_{11}$-$As_{DG}$.

The objective function QCF is designed such that the values of assignments which optimize this objective function maximize the similarity scores between detected objects assigned to a same group.

In particular embodiments of the invention, this objective function QCF has the form:

$$C = x^T Q x \quad (8)$$

where x is a vector containing the assignments and $Q$ is a matrix containing similarity scores. Only assignments to a same group are coupled via the matrix $Q$.

For instance, in a particular embodiment, if an assignment between a $d^{th}$ detected object and a $g^{th}$ group is noted $x_{dg}$, the objective function EQF is a sum over terms $x_{dg}Q_{dd'}x_{d'g}$ where $Q_{dd'}$ is a component of matrix $Q$ equal to the similarity score between the $d^{th}$ and $d'^{th}$ detected objects. Moreover, the objective function does not comprises terms such as $x_{dg}Q_{dd'}x_{d'g'}$ where g is different from g'.

In this particular embodiment, the maximisation of the objective function QCF correspond to maximizing the sum of sums on each group of similarity scores of detected objects assigned to this same group.

If a component of the matrix $Q$ is the opposite of a similarity score (i.e. a similarity score preceded by a minus sign), as in another similar embodiment, the same sum of similarity scores would be maximized by the minimization of the objective function.

Figure 5 represents a step EOp of evaluating values of assignments Oval via a quantum annealing solver.

A quantum annealing solver is a device implementing a system of coupled qubits, wherein the configuration of the coupling can be tuned.

A qubit is a two-level quantum state and have many different physical implementations, such as the spin of a particle or quantum system, or the polarization of a photon. The quantum nature of qubits has two important consequences for quantum computation.

Firstly, a qubit is a superposition of two single states (e.g. spin up or down, photon polarization up or down, presence or absence of a cooper pair etc.), which is not directly accessible by an observer. However, an observer can measure a qubit. There are two possible results of this measure, each corresponding to observing one of the two single states respectively with two probabilities, these probabilities being determined by the superposition of the single states. A single state of a qubit can be seen as an equivalent of a classical bit since it is a binary value.

In general, a single state can be seen as an equivalent of a sequence of classical bits. Hence, one measure of a quantum superposition of N single states can result in obtaining one of these N single states, with a certain probability related to the superposition.

Secondly, coupled qubits form a unique entangled state of qubits. If the system contains n qubits, this entangled state is a superposition of $2^n$ single states, which correspond to all sequences which can be formed with n classical bits. One measure of this entangled state results in obtaining one of these $2^n$ single states, which is hence equivalent to obtaining one sequence of classical bits among the $2^n$ sequences which can be formed with n bits.

An advantage of manipulating an entangled state of N single states is that its evolution (for instance with the application of external forces and internal couplings) is similar to a simultaneous evolution of the N single states, i.e. a change on one single state can instantly influence the other single states.

A technical consequence is the possibility to rapidly configure an entangled state of qubits, regardless the number of qubits.

The coupling between qubits can for instance be caused by local as well as spatially uniform electromagnetic forces.

An example of commercial hardware of quantum annealing solver is the D-wave Advantage computers. This type of quantum computer implements each qubit as a small volume superconductor controlled with a Josephson junction.

In the embodiment represented in figure 5, before using the quantum annealing solver QAS in a step EOp10, the problem of optimizing the objective function is mapped on a QUBO problem, that will be provided to the quantum annealing solver in step EOp10.

This mapping corresponds to step EOp05 in figure 5. In order to provide the QUBO problem to the quantum annealing solver QAS, the QUBO problem has to corresponds to a problem of minimizing an energy, this energy being the total energy of a system of coupled qubits.

This total energy is represented by a function of the single qubit states. The mapping from the objective function QCF to the QUBO problem is a change of variable from the assignments to the qubits. For instance, if a single state of a qubit takes the values -1 or 1, the change of variable corresponding to the mapping of objective function (8) to the QUBO problem is $x = (s + 1)/2$, where s represents the qubits single states, and the total energy corresponds to the following function quadratic in the variables $s$:

$$s^T Q s + h^T s \quad (9)$$

wherein $h^T = 2l^T Q$ and $l^T$ is a vector containing only ones. Since the quantum annealing solver QAS estimates solution which minimizes function (9), the value of $Q$ in (9) corresponds to opposite of similarity scores, such that their sums is maximized while function (9) is minimized. In a case where $Q$ contained similarity scores without minus sign, the function to minimize would contain an additional minus sign in front of its terms.

In the substep EOp10 represented in figure 5, the quantum annealing solver QAS obtains estimated solutions of the QUBO problem.

During the step EOp10, and as explained above, the quantum annealing solver configures the couplings between qubits according to a first simple coupling scheme and make it evolve, in the adiabatic quantum annealing phase of the process, toward a final configuration of qubits couplings corresponding to the QUBO problem. This final configuration of qubits couplings is done accordingly to the function derived from the objective function QCF and describing the total energy of the system of coupled qubits.

Details on solving QUBO problems with quantum adiabatic computation can be found in the following document: [Date, Prasanna, et al. "Efficiently embedding QUBO problems on adiabatic quantum computers." Quantum Inf. Process. 18.4 (2019): 117.].

The step of coupling qubits according to a particular function is called minor embedding. Details on minor embedding can be found in the following document: [Jun Cai et al, "A practical heuristic for finding graph minors", 2014, arXiv:1406.2741].

After the adiabatic quantum annealing phase, the state of coupled qubits is measured, yielding an estimated solution Sol of the QUBO problem. For instance, if the QUBO problem is represented by the function (9), the measure yields a single state of the qubits system corresponding to particular values for the component of the vector s. With a high probability, these particular values are the values of s that minimize the function (9).

In a particular embodiment, the above described process for obtaining an estimated solution by the quantum annealing solver QAS is repeated several times. Each iteration of the process yields a single state with a certain probability. The estimated solution Sol can then be chosen as the single state which has the lowest energy among the single states obtained in each iteration of the process. For instance, if the QUBO problem is the minimization of function (9), the estimated solution Sol is a set of particular values of the vector s determined as described above.

In a substep EOp20 represented in figure 5, the values of assignments Oval are deduced from the estimated solution Sol obtained in step EOp10. For instance, if the estimated solution Sol corresponds to a particular values of the vector s of equation (9), the values of assignments OVal are deduced with the formula $x = (s + 1)/2$.

The figure 5 represents a step EG of gathering the detected objects ($O_1$-$O_D$) in the groups ($Gr_1$-$Gr_G$) according to the values of assignments determined in step EOp.

For instance, if the value of assignment $As_{dg}$ of object $O_d$ with group $Gr_g$ is equal to one, detected object $O_d$ is put into group $Gr_g$. Conversely, if the value of assignment $As_{dg}$ is null, detected object $O_d$ is not put into group $Gr_g$.

Figure 6 represents a device DMOT for realizing an embodiment of the method as represented in figure 5.

This device DMOT comprises several modules, each realizing a step of the method according to a particular embodiment.

In the present application, the term module may correspond to a software component as well as to a hardware component or a set of hardware and software components, a software component corresponding to one or more computer programs or sub-programs or, more generally, to any element of a program capable of implementing a function or a set of functions as described for the modules concerned. Similarly, a hardware component corresponds to any element of a hardware assembly capable of implementing a function or a set of functions for the module concerned (integrated circuit, chip card, memory card, etc.).

Figure 6 represents a module MOC which realizes the step EOC for obtaining similarity scores between detected objects $O_1$-$O_D$ on a sequence of frames $F_1$-$F_N$.

Figure 6 represents a module MDQ which generates, according to step EDQ, an objective function QCF which is quadratic in assignments of objects $O_1$-$O_D$ to groups $Gr_1$-$Gr_G$.

Figure 6 represents a module MOp which evaluates values of assignments according to step EOp. This module MOp comprises submodules MOp05, MOp10 and MOp20 which respectively realize step EOp05, EOp10 and EOp20.

In order to obtain an estimated solution Sol of a QUBO problem, the module MOp10 is connected to a quantum annealing solver QAS. In particular embodiments, this connection is an offline local connection. In another embodiments, this connection is a remote connection.

Figure 6 represents a module MG which groups the detected objects $O_1$-$O_D$ with respect the groups $Gr_1$-$Gr_g$ according to step EG.

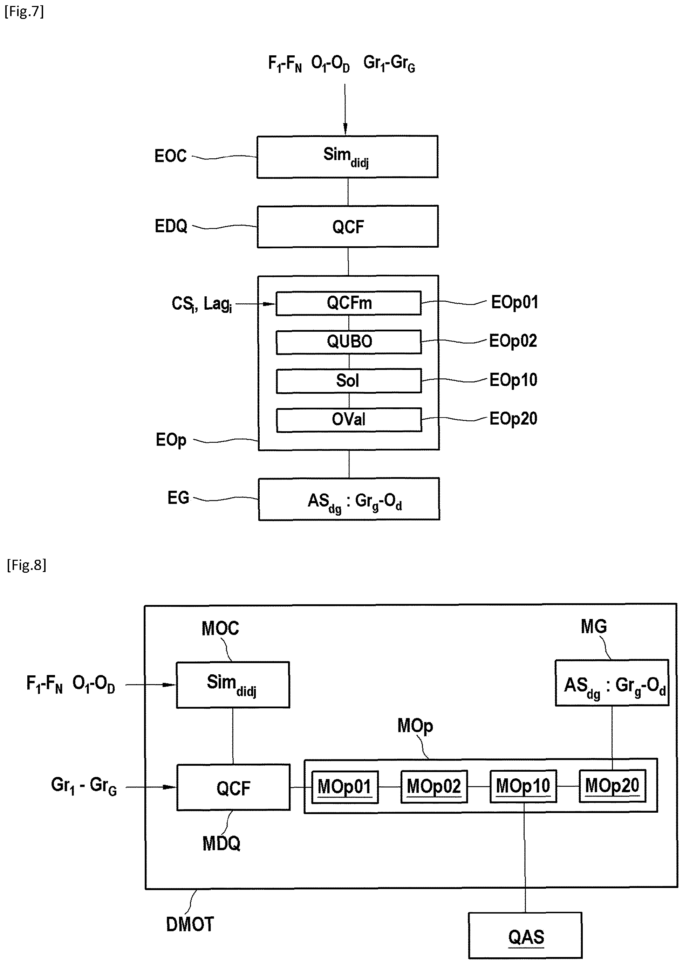

Figure 7 represents a second embodiment of the method for grouping detected objects.

This embodiment differs from the embodiment represented by figure 5 in that the substep EOp05 represented in figure 5 is here replaced by substeps EOp01 and EOp02.

Steps EOp01 and EOp02 represented on figure 7 enables to generate a QUBO problem corresponding to the objective function QCF, and include constraints on the assignments $As_{11}$-$As_{DG}$ in this QUBO problem, according to a particular embodiment.

In this particular embodiment, the constraints are as follows:

- each said detected object $O_d$ has to be assigned either to a single group $Gr_g$ among the groups $Gr_1$-$Gr_G$ or to a set of false positive detections dGr.
- for each group $Gr_g$, and for each frame $F_i$, either a single detected object $O_{di}$ in this frame $F_i$ among said detected objects $O_1$-$O_D$ or a dummy detection dO has to be assigned to this group $Gr_g$.

Such choice of constraint is not limitative for the invention. For instance, in other particular embodiments, only one of these two sets of constraints is included in the QUBO problem.

In this purpose, in the substep EOp01, a modified objective function QCFm is generated from the objective function QCF by adding a constraint term to the objective function.

In the same way as the objective function QCF, the constraint term is quadratic with respect to assignments.

In a particular embodiment, the objective function QCF is the same as in equation (8) and the constraint term is proportional to the squared Euclidean norm of the vector $G_i x$ - $d_i$, where $G_i$ and $d_i$ are vector such that the $i^{th}$ constraint $CS_i$ on the assignments is $G_i x = d_i$.

This constraint term comprises the term $d_i^2$ which is independent of the assignments and can thus be ignored. Thus, in a particular embodiment, the constraint is

$$\sum_i \lambda_i \left( x^T G_i^T G_i x - 2 d_i G_i x \right) \qquad (10)$$

And the corresponding modified objective function QCFm is

$$C' = x^T Q' x + b x \qquad (11)$$

where

$$Q' = Q + \sum_i \lambda_i G_i^T G_i \text{ and } b = -2 \sum_i \lambda_i d_i G_i \qquad (12)$$

$\lambda_i$ is a value called a Lagrange multiplier which quantifies the weight of the $i^{th}$ constrain $CS_i$ in the modified objective function.

In a particular embodiment, the Lagrange multiplier is the same for all constraints, such that the modified objective function is $C' = x^T Q' x + b x$, where $Q' = Q + \lambda G^T G$ and $b = -2\lambda d^T G$, where $G$ is a matrix whose each ith row is equal to the vector $G_i$ and $d$ is a vector whose each ith component is equal to $d_i$.

Figure 7 also represents a substep EOp02 for generating a QUBO problem from the modified objective function QCFm. This substep is similar to substep EOp05 represented in figure 5. The difference is that the mapping is not done from the objective function QCF as in substep EOp05, but is done from the modified objective function QCFm.

In a particular embodiment, the change of variable corresponding to the mapping of modified objective function of equation (11) to the QUBO problem is $x = (s + 1)/2$, where s represents the qubits single states, and the total energy corresponds to the following function quadratic in the variables s:

$$s^T Q' s + h'^T s \qquad (13)$$

wherein $h'^T = 2(b^T + I^T Q)$.

Figure 8 represents a device DMOT for realizing an embodiment of the method as represented in figure 7. The difference between figure 8 and figure 6 is that the module MOp represented in figure 8 comprises two submodules MOp01 and MOp02 in place of the submodule MOp05 represented in figure 6. The submodules MOp01 and MOp02 respectively realize the step EOp01 and EOp02 represented in figure 7 and described above.

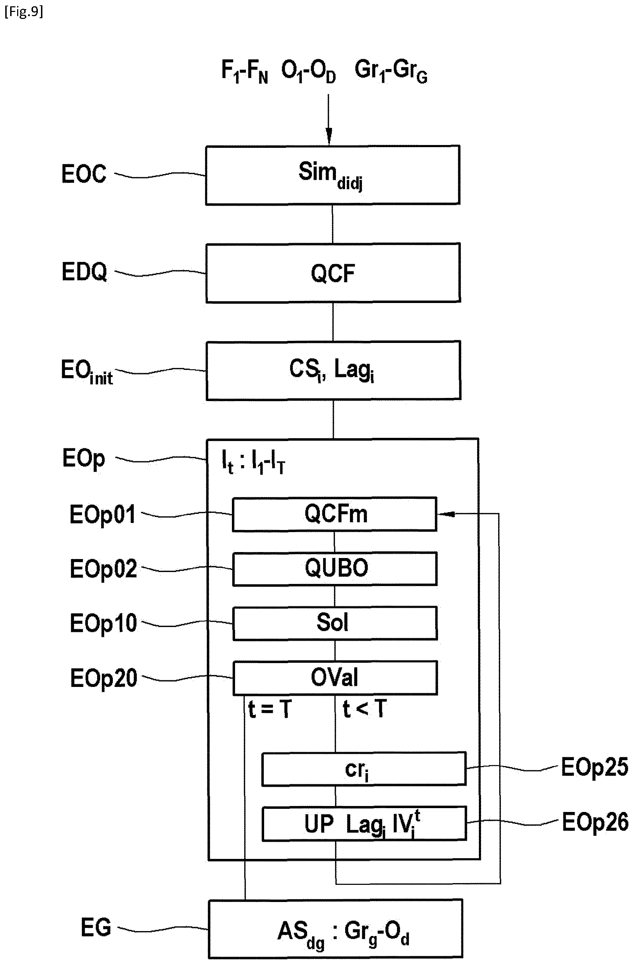

Figure 9 represents a second embodiment of the method for grouping detected objects.

It differs from the embodiment represented in figure 7 in that:

- several iteration $I_1$-$I_T$ of the evaluating step EOp are performed;
- non terminal iteration $I_t$ for t<T comprises substeps EOp25 and EOp26.

The step EOp20 of the iteration $I_t$ obtains values of assignments.

In step EOp25 of this embodiment, for each constraint, a variation $cr_i$ of the modified objective function caused by violation of this constraint $CS_i$ by the assignments, is estimated. In a particular embodiment wherein the objective function corresponds to equations (11) and (12), the variation $cr_i$ is proportional to:

$$v_i = (G_i \text{o} x_t)^T Q x_t - \min\{(G_i \text{o} x_t) \text{o} (Q x_t)\} \quad (14)$$

Where $x_t$ is a vector containing the values of assignments obtained in the step EOp20 of the current iteration $I_t$ of the step EOp.

In the step EOp26, the Lagrange multipliers $Lag_i$ are updated with the variations $cr_i$ obtained in step EOp25 of the current iteration $I_t$.

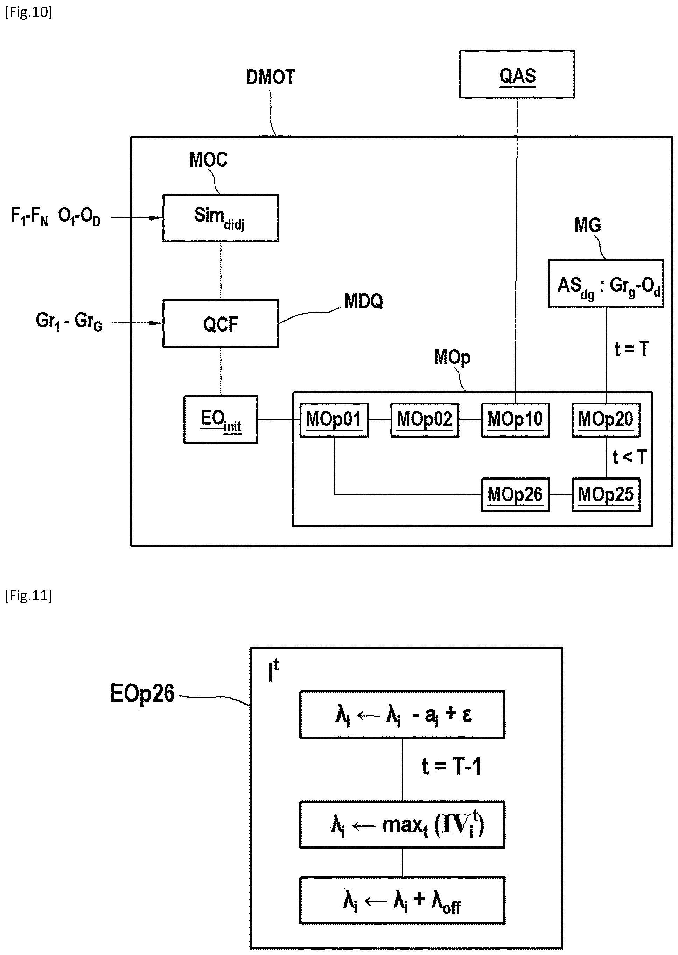

A particular embodiment of the updating step EOp26 is represented in figure 11.

After a nonterminal iteration $I_t$ with t<T, a new iteration $I_{t+1}$ starts with the step EOp01 of generating a modified objective function QCFm.

In a new iteration $I_{t+1}$, the modified objective function QCFm is generated with the Lagrange multipliers $Lag_i$ updated in the substep EOp26 of the precedent iteration $I_t$.

In the terminal iteration $I_T$ of the evaluating step EOp, substeps EOp25 and EOp26 are not performed.

In the embodiment represented by figure 9, the step EG groups the detected objects $O_1$-$O_D$ according to the assignments values $As_{11}$-$As_{DG}$ obtained in the substep EOp20 of the last iteration $I_T$ of the evaluating step EOp.

The figure 11 represents the substep EOp26, in iteration $I_t$ of the evaluating step EOp, of updating the Lagrange multipliers $Lag_i$ in a particular embodiment.

In the embodiment represented by figure 11, the modified objective function is given by equations (11) and (12).

Also, in this embodiment, during nonterminal iterations $I_t$ of the evaluating step EOp, an intermediate value $IV_i^t$ associated to each constraint $CS_i$ is fixed equal to the Lagrange multiplier $Lag_i$ associated to this constraint $CS_i$, before the updating step EOp26 of this iteration. The intermediate values thus obtained during the several nonterminal iterations $I_t$ are used in the updating substep EOp26 of the penultimate iteration $I_{T-1}$ of the evaluating step EOp, as described below. In this embodiment, the intermediate value $IV_i^t$ are determined during iterations subsequent to a given nonterminal iteration.

A first operation of updating a Lagrange multiplier $Lag_i$ is subtracting from this Lagrange multiplier $Lag_i$ a quantity equal $a_i$ to 2 $v_i/(G_i x_t - d_i)^2$, where $v_i$ is given by equation (14). In another particular embodiment, this quantity is equal to a factor multiplied by 2 $v_i/(G_i x_t - d_i)^2$. For instance, this factor can be tuned in order to increase or decrease the amplitude of the modification done on the Lagrange multiplier during each iteration.

In the embodiment corresponding to figure 11, this first operation of updating also comprises a subtraction of a constant $\varepsilon$ to a Lagrange multiplier which is updated. This constant allows assuring that subsequently obtained estimated solutions fulfil the constraints. For instance, a value of 0.1 can be attributed to this constant $\varepsilon$.

The first updating operation represented on figure 11 thus corresponds to the formula, for a given Lagrange multiplier:

$$\lambda_i \leftarrow \lambda_i - a_i + \varepsilon$$

In another embodiments, the first operation of updating EOp26 comprises only the subtraction by a quantity equal or proportional to quantity equal to 2 $v_i/(G_i x_t - d_i)^2$.

In a particular embodiment, this operation of updating is done only on Lagrange multipliers associated to constraints that are not fulfilled by the assignment values obtained in the current iteration $I_t$.

The figure 11 represents 2 additional operations in the updating step EOp26, these additional operations being performed in the penultimate iteration $I_{T-1}$ of the evaluating step EOp.

The first of these additional operations consists in determining, for each constraint $CS_i$, the Lagrange multiplier $Lag_i$ associated to this constraint $CS_i$ as the intermediate value $IV_i^t$ which has the largest modulus, among the intermediate values $IV_i^t$ associated to this constraint $CS_i$ and obtained as described above. This operation corresponds to the formula, for a given Lagrange multiplier:

$$\lambda_i \leftarrow \max_t (IV_i^t)$$

The second of these additional operations is the addition of an offset $\lambda_{off}$ to the Lagrange multipliers obtained after the first operation described above. This operation corresponds to the formula, for a given Lagrange multiplier:

$$\lambda_i \leftarrow \lambda_i + \lambda_{off}$$

In a particular embodiment of the method, the updating EOp26 comprises only one or two operations among the three operations of updating described above.

Figure 10 represents a device DMOT for realizing an embodiment of the method as represented in figure 9. The difference between figure 10 and figure 8 is that the module MOp represented in figure 10 comprises two additional submodules MOp25 and MOp26 which respectively realize the substeps EOp25 and EOp26 represented in figure 9 and described above.

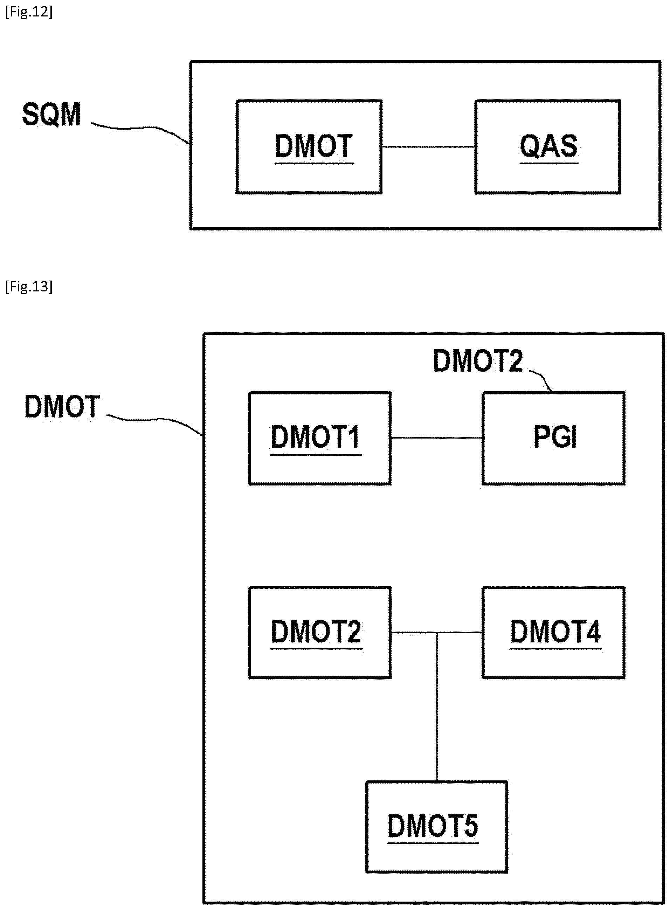

Figure 12 represents a system SQM comprising a device DMOT shown in Figure 5 and a quantum annealing solver QAS, in accordance with a particular embodiment of the invention.

Figure 13 depicts the hardware architecture of a device DMOT for grouping detected objects according to a particular embodiment of the invention.

In this embodiment the device DMOT and the quantum annealing solver QAS are connected with an offline interface.

In another embodiment the device DMOT and the quantum annealing solver QAS are connected with an online connection. For instance, an online connection can be realized via a server and be a remote connection

In the embodiment described herein, the determination device DMOT has a hardware architecture of a computer. In particular, it comprises a processor DMOT1, a read-only memory DMOT2, a random access memory DMOT3, a rewritable non-volatile memory DMOT4 and communication means DMOT5.

The read-only memory DMOT2 of the device DMOT constitutes a storage medium in accordance with the invention, readable by the processor DMOT1 and on which is stored a computer program PGI in accordance with the invention, this program comprising instructions for executing the steps of a method in accordance with the invention described previously with reference to Figure 5 in an embodiment.

The computer program PGI defines functional modules of the device DMOT shown in Figure 5.

## Claims

1. A computer-implemented method for grouping detected objects ($O_1$-$O_D$) such that a group ($Gr_g$) comprises detected objects ($O_d$) corresponding to a given type of object, a said detected object ($O_d$) being on a frame ($F_i$) belonging to a sequence of frames ($F_1$-$F_N$), said method consisting in determining values (Oval) of assignments ($As_{11}$-$As_{DG}$) of said detected objects ($O_1$-$O_D$) to said groups ($Gr_1$-$Gr_G$), a said assignment ($As_{dg}$) being a Boolean variable indicating if a detected object ($O_d$) belongs to a group ($Gr_g$), said method comprising the following steps:

    - obtaining (EOC), for each pair of detected objects ($O_{di}$, $O_{dj}$) respectively detected on different frames ($F_i$, $F_j$), a similarity score ($Sim_{didj}$) representative of visual and/or spatial correlations between detected objects ($O_{di}$, $O_{dj}$) of said pair;
    - determining (EDQ), based on said similarity scores ($Sim_{didj}$), an objective function (QCF) quadratic with respect to said assignments, an optimization of said objective function (QCF) corresponding to maximizing a combination of similarity scores between detected objects assigned to a same said group;
    - evaluating (EOp) values of said assignments, said evaluating step comprising the following substeps:

        (i) obtaining (EOp10), using an annealing solver (QAS), an estimated solution (Sol) of an unconstrained binary quadratic optimization problem (QUBO) corresponding to said objective function (QCF);
        (ii) post-processing (EOp20) said estimated solution (Sol) to obtain said values (Oval) of assignments ($As_{11}$-$As_{DG}$);

    - gathering (EG), in at least one group ($Gr_g$), detected objects ($O_d$) according to said values (Oval) of assignments ($As_{dg}$) of these detected objects to this group ($Gr_g$).

2. The method according to claim 1 wherein said annealing solver (QAS) is a quantum annealing solver.

3. The method according to claim 1 or 2 wherein constraints ($Cs_i$) on said assignments ($As_{11}$-$As_{DG}$) are included in said unconstrained binary quadratic optimization problem (QUBO), said constraints ($CS_i$) indicating that each said detected object ($O_d$) has to be assigned either to a single group ($Gr_g$) among said groups ($Gr_1$-$Gr_G$) or to a set of false positive detections (dGr).

4. The method according to any of claims 1 to 3 wherein constraints ($Cs_i$) on said assignments ($As_{11}$-$As_{DG}$) are included in said unconstrained binary quadratic optimization problem (QUBO), said constraints ($CS_i$) indicating that for each said group ($Gr_g$), and for each said frame ($F_i$), either a single detected object ($O_{di}$) in this frame ($F_i$) among said detected objects ($O_1$-$O_D$) or a dummy detection (dO) has to be assigned to this group ($Gr_g$).

5. The method according to any of claims 1 to 4 wherein said constraints ($Cs_i$) are included in said unconstrained binary quadratic optimization problem (QUBO) with following substeps of said evaluating step (EOp):

   - determining (EOp01) a modified objective function (QCFm) by adding, to said objective function (QCF), a constraint term (CT) representative of said constraints ($CS_i$), said constraint term (CT) being quadratic with respect to assignments ($As_{11}$-$As_{DG}$) and proportional to at least one Lagrange multiplier ($Lag_i$) associated with at least one constraint ($CS_i$),
   - generating (EOp02) said unconstrained binary quadratic optimization problem (QUBO) from said modified objective function (QCFm);

6. The method according to claim 5 wherein said objective function is:

$$C = x^T Q x + cx$$

   where x is a vector containing said assignments, $Q$ is a matrix containing similarity scores and $c$ is a bias vector; and
   wherein said modified objective function is:

$$C' = x^T Q' x + bx$$

   where $Q' = Q + \sum_i \lambda_i G_i^T G_i$ and $b = c - 2\sum_i \lambda_i d_i G_i$, $G_i$ and $d_i$ being respectively a vector and a number such that $i^{th}$ constraint ($CS_i$) is $G_i x = d_i$, $\lambda_i$ being a said Lagrange multiplier associated with the $i^{th}$ constraint ($CS_i$);

7. The method according to claim 5 or 6 **characterized in that**:

   - several iterations ($I^1$-$I^T$) of said evaluating step (EOp) are performed;

   and wherein at least one nonterminal current iteration ($I^t$) of the evaluating step (EOp) comprises the following substeps:

   - estimating (EOp25), for at least a given said constraint ($CS_i$), a variation ($cr_i$) of the objective function caused by a violation of this constraint ($CS_i$) by said values (Oval) of assignments ($As_{11}$-$AS_{DG}$) obtained in the post-processing substep (EOp20) of said current iteration;
   - updating (EOp26) at least a said Lagrange multiplier ($Lag_i$) with said variation ($cr_i$) caused by the violation of the constraint ($CS_i$) associated with this Lagrange multiplier ($Lag_i$);

8. The method according to claim 7 wherein the updating (EOp26) of at least a said Lagrange multiplier ($Lag_i$) comprises an addition of a constant ($\varepsilon$) to said Lagrange multiplier ($Lag_i$).

9. The method according to claim 7 or 8 wherein,

   - during at least one nonterminal iteration ($I^t$) of the evaluating step (EOp), at least one intermediate value ($IVit_i$) associated to a said constraint ($CS_i$) is fixed equal to the Lagrange multiplier ($Lag_i$) associated to said constraint ($CS_i$);
   - the substep of updating (EOp26) in the penultimate iteration ($I_{T-1}$) of evaluating step (EOp) comprises the determination of the Lagrange multiplier ($Lag_i$) associated to a said constraint ($CS_i$) as the intermediate value which has the largest modulus, among said at least one intermediate values obtained during at least one nonterminal iteration and associated to said constraint ($CS_i$).

10. The method according to any of claims 7 to 9 wherein the substep of updating (EOp26), in the penultimate iteration ($I_{T-1}$) of evaluating step (EOp), comprises the addition of an offset ($\lambda_{off}$) to said Lagrange multiplier ($Lag_i$).

11. The method according to any of claims 7 to 10, when claim 7 is dependant of claim 6,

wherein:

- during a given iteration ($I^t$) of the evaluating step (EOp), a said variation ($cr_i$) is proportional to: $v_i = (\boldsymbol{G_i}o\boldsymbol{x_t})^T \boldsymbol{Qx_t} - \min\{(\boldsymbol{G_i}o\boldsymbol{x_t})o(\boldsymbol{Qx_t})\}$

where $\boldsymbol{x_t}$ is a vector containing the values (Oval) of assignments obtained in the post-processing step (EOp20) during said iteration ($I^t$) and $\min\{(\boldsymbol{G_i}o\boldsymbol{x_t})o(\boldsymbol{Qx_t})\}$ is the smallest element of vector $(\boldsymbol{G_i}o\boldsymbol{x_t})o(\boldsymbol{Qx_t})$; and wherein

- said updating (EOp26) of the Lagrange multiplier ($Lag_i$) associated with the constraint ($CS_i$) which caused said variation ($cr_i$) comprises subtracting a quantity proportional to $2 v_i(\boldsymbol{G_i x_t} - \boldsymbol{d_i})^2$ from this Lagrange multiplier ($Lag_i$).

12. The method according to any of claims 1 to 11 wherein said similarity scores are determined with a neural network.

13. The method according to any of claims 1 to 12 wherein said annealing solver (QAS) is simulated.

14. A device (DMOT) for grouping detected objects ($O_1$-$O_D$) such that a group ($Gr_g$) comprises detected objects ($O_d$) corresponding to a given type of object, a said detected object ($O_d$) being detected on a frame ($F_i$) belonging to a sequence of frames ($F_1$-$F_N$), said method consisting in determining values (Oval) of assignments ($As_{11}$-$As_{DG}$) of said detected objects ($O_1$-$O_D$) to said groups ($Gr_1$-$Gr_G$), a said assignment ($As_{dg}$) being a Boolean variable indicating if a detected object ($O_d$) belongs to a group ($Gr_g$), said device comprising:

- a module for obtaining (MOC), for each pair of detected objects ($O_{di}$, $O_{dj}$) respectively detected on different frames ($F_i$, $F_j$), a similarity score ($Sim_{didj}$) representative of visual and/or spatial correlations between detected objects ($O_{di}$, $O_{dj}$) of said pair;
- a module for determining (MDQ,) based on said similarity scores ($Sim_{didj}$), an objective function (QCF) quadratic with respect to said assignments, an optimization of said objective function (QCF) corresponding to maximizing a combination of similarity scores between detected objects assigned to a same said group;
- a module for evaluating (MOp) said assignments, said evaluating module(MOp) comprising the following submodules:

(i) a submodule for obtaining (MOp10), using an annealing solver (QAS), an estimated solution (Sol) of an unconstrained binary quadratic optimization problem (QUBO) corresponding to said objective function (QCF);
(ii) a submodule for post-processing (MOp20) said estimated solution (Sol) to obtain said values (Oval) of assignments ($As_{11}$-$As_{DG}$);

- a module for gathering (MG), in at least one group ($Gr_g$), detected objects ($O_d$) according to said values (Oval) of assignments ($As_{dg}$) of these detected objects to this group ($Gr_g$).

15. A system (SQM) comprising a device (DMOT) according to claim 14 and an annealing solver (QAS).

16. A computer program (PGI) comprising instructions which, when the program is executed by a computer, cause the computer to carry out the method according any of claims 1 to 13.

17. A storage medium (DD2), readable by computer equipment (EI), of a computer program (PGI) comprising instructions for executing the steps of the method according to at least one of claims 1 to 13.

**Amended claims in accordance with Rule 137(2) EPC.**

1. A computer-implemented method for grouping objects ($O_1$-$O_D$) detected on images such that a group ($Gr_g$) comprises detected objects ($O_d$) corresponding to a given type of object, a said detected object ($O_d$) being on an image frame ($F_i$) belonging to a sequence of image frames ($F_1$-$F_N$), said method consisting in determining values (Oval) of assignments ($As_{11}$-$As_{DG}$) of said detected objects ($O_1$-$O_D$) to said groups ($Gr_1$-$Gr_G$), a said assignment ($As_{dg}$) being a Boolean variable indicating if a detected object ($O_d$) belongs to a group ($Gr_g$), said method comprising the following steps:

   - obtaining (EOC), for each pair of detected objects ($O_{di}$, $O_{dj}$) respectively detected on different image frames ($F_i$, $F_j$), a similarity score ($Sim_{didj}$) representative of visual and/or spatial correlations between detected objects ($O_{di}$, $O_{dj}$) of said pair;
   - determining (EDQ), based on said similarity scores ($Sim_{didj}$), an objective function (QCF) quadratic with respect to said assignments, an optimization of said objective function (QCF) corresponding to maximizing a combination of similarity scores between detected objects assigned to a same said group;
   - evaluating (EOp) values of said assignments, said evaluating step comprising the following substeps:

      (i) obtaining (EOp10), using an annealing solver (QAS), an estimated solution (Sol) of an unconstrained binary quadratic optimization problem (QUBO) corresponding to said objective function (QCF);
      (ii) post-processing (EOp20) said estimated solution (Sol) to obtain said values (Oval) of assignments ($As_{11}$-$As_{DG}$);

   - gathering (EG), in at least one group ($Gr_g$), detected objects ($O_d$) according to said values (Oval) of assignments ($As_{dg}$) of these detected objects to this group ($Gr_g$).

2. The method according to claim 1 wherein said annealing solver (QAS) is a quantum annealing solver.

3. The method according to claim 1 or 2 wherein constraints ($Cs_i$) on said assignments ($As_{11}$-$As_{DG}$) are included in said unconstrained binary quadratic optimization problem (QUBO), said constraints ($CS_i$) indicating that each said detected object ($O_d$) has to be assigned either to a single group ($Gr_g$) among said groups ($Gr_1$-$Gr_G$) or to a set of false positive detections (dGr).

4. The method according to any of claims 1 to 3 wherein constraints ($Cs_i$) on said assignments ($As_{11}$-$As_{DG}$) are included in said unconstrained binary quadratic optimization problem (QUBO), said constraints ($CS_i$) indicating that for each said group ($Gr_g$), and for each said frame ($F_i$), either a single detected object ($O_{di}$) in this frame ($F_i$) among said detected objects ($O_1$-$O_D$) or a dummy detection (dO) has to be assigned to this group ($Gr_g$).

5. The method according to any of claims 1 to 4 wherein said constraints ($Cs_i$) are included in said unconstrained binary quadratic optimization problem (QUBO) with following substeps of said evaluating step (EOp):

   - determining (EOp01) a modified objective function (QCFm) by adding, to said objective function (QCF), a constraint term (CT) representative of said constraints ($CS_i$), said constraint term (CT) being quadratic with respect to assignments ($As_{11}$-$As_{DG}$) and proportional to at least one Lagrange multiplier ($Lag_i$) associated with at least one constraint ($CS_i$),
   - generating (EOp02) said unconstrained binary quadratic optimization problem (QUBO) from said modified objective function (QCFm);

6. The method according to claim 5 wherein said objective function is:

$$C = x^T Q x + cx$$

where x is a vector containing said assignments, Q is a matrix containing similarity scores and c is a bias vector; and
wherein said modified objective function is:

$$C' = x^T Q' x + bx$$

where $Q' = Q + \sum_i \lambda_i G_i^T G_i$ and $b = c - 2\sum_i\lambda_i d_i G_i$, $G_i$ and $d_i$ being respectively a vector and a number such that $i^{th}$ constraint ($CS_i$) is $G_i x = d_i$, $\lambda_i$ being a said Lagrange multiplier associated with the $i^{th}$ constraint ($CS_i$);

7. The method according to claim 5 or 6 **characterized in that**:

   - several iterations ($I^1$-$I^T$) of said evaluating step (EOp) are performed;

   and wherein at least one nonterminal current iteration ($I^t$) of the evaluating step (EOp) comprises the following substeps:

   - estimating (EOp25), for at least a given said constraint ($CS_i$), a variation ($cr_i$) of the objective function caused by a violation of this constraint ($CS_i$) by said values (Oval) of assignments ($As_{11}$-$As_{DG}$) obtained in the post-processing substep (EOp20) of said current iteration;
   - updating (EOp26) at least a said Lagrange multiplier ($Lag_i$) with said variation ($cr_i$) caused by the violation of the constraint ($CS_i$) associated with this Lagrange multiplier ($Lag_i$);

8. The method according to claim 7 wherein the updating (EOp26) of at least a said Lagrange multiplier ($Lag_i$) comprises an addition of a constant ($\varepsilon$) to said Lagrange multiplier ($Lag_i$).

9. The method according to claim 7 or 8 wherein,

   - during at least one nonterminal iteration ($I_t$) of the evaluating step (EOp), at least one intermediate value ($IVit_i$) associated to a said constraint ($CS_i$) is fixed equal to the Lagrange multiplier ($Lag_i$) associated to said constraint ($CS_i$);
   - the substep of updating (EOp26) in the penultimate iteration ($I_{T-1}$) of evaluating step (EOp) comprises the determination of the Lagrange multiplier ($Lag_i$) associated to a said constraint ($CS_i$) as the intermediate value which has the largest modulus, among said at least one intermediate values obtained during at least one nonterminal iteration and associated to said constraint ($CS_i$).

10. The method according to any of claims 7 to 9 wherein the substep of updating (EOp26), in the penultimate iteration ($I_{T-1}$) of evaluating step (EOp), comprises the addition of an offset ($\lambda_{off}$) to said Lagrange multiplier ($Lag_i$).

11. The method according to any of claims 7 to 10, when claim 7 is dependant of claim 6, wherein:

    - during a given iteration ($I^t$) of the evaluating step (EOp), a said variation ($cr_i$) is proportional to:

$$v_i = (G_i \text{o} x_t)^T Q x_t - \min\{(G_i \text{o} x_t)\text{o}(Q x_t)\}$$

   where $x_t$ is a vector containing the values (Oval) of assignments obtained in the post-processing step (EOp20) during said iteration ($I^t$) and $\min\{(G_i \text{o} x_t)\text{o}(Q x_t)\}$ is the smallest element of vector ($G_i \text{o} x_t)\text{o}(Q x_t)$; and wherein
   - said updating (EOp26) of the Lagrange multiplier ($Lag_i$) associated with the constraint ($CS_i$) which caused said variation ($cr_i$) comprises subtracting a quantity proportional to $2 v_i/(G_i x_t - d_i)^2$ from this Lagrange multiplier ($Lag_i$).

12. The method according to any of claims 1 to 11 wherein said similarity scores are determined with a neural network.

13. The method according to any of claims 1 to 12 wherein said annealing solver (QAS) is simulated.

14. A device (DMOT) for grouping detected objects ($O_1$-$O_D$) such that a group ($Gr_g$) comprises objects ($O_d$) detected on images corresponding to a given type of object, a said detected object ($O_d$) being detected on an image frame ($F_i$) belonging to a sequence of image frames ($F_1$-$F_N$), said method consisting in determining values (Oval) of assignments ($As_{11}$-$As_{DG}$) of said detected objects ($O_1$-$O_D$) to said groups ($Gr_1$-$Gr_G$), a said assignment ($As_{dg}$) being a Boolean variable indicating if a detected object ($O_d$) belongs to a group ($Gr_g$), said device comprising:

    - a module for obtaining (MOC), for each pair of detected objects ($O_{di}$, $O_{dj}$) respectively detected on different

image frames ($F_i$, $F_j$), a similarity score ($Sim_{didj}$) representative of visual and/or spatial correlations between detected objects ($O_{di}$, $O_{dj}$) of said pair;
- a module for determining (MDQ,) based on said similarity scores ($Sim_{didj}$), an objective function (QCF) quadratic with respect to said assignments, an optimization of said objective function (QCF) corresponding to maximizing a combination of similarity scores between detected objects assigned to a same said group;
- a module for evaluating (MOp) said assignments, said evaluating module(MOp) comprising the following submodules:

> (i) a submodule for obtaining (MOp10), using an annealing solver (QAS), an estimated solution (Sol) of an unconstrained binary quadratic optimization problem (QUBO) corresponding to said objective function (QCF);
> (ii) a submodule for post-processing (MOp20) said estimated solution (Sol) to obtain said values (Oval) of assignments ($As_{11}$-$As_{DG}$);

> - a module for gathering (MG), in at least one group ($Gr_g$), detected objects ($O_d$) according to said values (Oval) of assignments ($As_{dg}$) of these detected objects to this group ($Gr_g$).

15. A system (SQM) comprising a device (DMOT) according to claim 14 and an annealing solver (QAS).

16. A computer program (PGI) comprising instructions which, when the program is executed by a computer, cause the computer to carry out the method according any of claims 1 to 13.

17. A storage medium (DD2), readable by computer equipment (EI), of a computer program (PGI) comprising instructions for executing the steps of the method according to at least one of claims 1 to 13.

[Fig.1A-1B]

1A

1B

[Fig.2A-2B]

2A

2B

[Fig.3A-3B]

[Fig.4A-4C]

[Fig.5]

$F_1\text{-}F_N \quad O_1\text{-}O_D \quad Gr_1\text{-}Gr_G$

EOC — $Sim_{didj}$

EDQ — QCF

EOp —

QUBO — EOp05

Sol — EOp10

OVal — EOp20

EG — $AS_{dg} : Gr_g\text{-}O_d$

[Fig.6]

MOC

$F_1\text{-}F_N \quad O_1\text{-}O_D$ → $Sim_{didj}$

MG

$AS_{dg} : Gr_g\text{-}O_d$

MOp

$Gr_1 - Gr_G$ → QCF

MOp05 — MOp10 — MOp20

MDQ

DMOT

QAS

[Fig.7]

$F_1$-$F_N$  $O_1$-$O_D$  $Gr_1$-$Gr_G$

EOC — | $Sim_{didj}$ |

EDQ — | QCF |

$CS_i$, $Lag_i$ → | QCFm | — EOp01
| QUBO | — EOp02
| Sol | — EOp10
| OVal | — EOp20

EOp —

EG — | $AS_{dg}$ : $Gr_g$-$O_d$ |

[Fig.8]

MOC | MG

$F_1$-$F_N$  $O_1$-$O_D$ → | $Sim_{didj}$ |  | $AS_{dg}$ : $Gr_g$-$O_d$ |

MOp

$Gr_1$ - $Gr_G$ → | QCF |  | MOp01 | — | MOp02 |  | MOp10 | — | MOp20 |

MDQ

DMOT

QAS

[Fig.9]

$$F_1\text{-}F_N \quad O_1\text{-}O_D \quad Gr_1\text{-}Gr_G$$

EOC — $Sim_{didj}$

EDQ — QCF

$EO_{init}$ — $CS_i, Lag_i$

EOp — $I_t : I_1\text{-}I_T$

EOp01 — QCFm

EOp02 — QUBO

EOp10 — Sol

EOp20 — OVal

$t = T$     $t < T$

$cr_i$ — EOp25

UP $Lag_i$ $IV_i^t$ — EOp26

EG — $AS_{dg} : Gr_g\text{-}O_d$

[Fig.10]

[Fig.11]

[Fig.12]

SQM

DMOT — QAS

[Fig.13]

DMOT2

DMOT

DMOT1 — PGI

DMOT2 — DMOT4

DMOT5

Europäisches
Patentamt
European
Patent Office
Office européen
des brevets

# EUROPEAN SEARCH REPORT

Application Number

EP 22 15 7100

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BIRDAL TOLGA ET AL: "Quantum Permutation Synchronization", 2021 IEEE/CVF CONFERENCE ON COMPUTER VISION AND PATTERN RECOGNITION (CVPR), [Online] 26 November 2021 (2021-11-26), pages 13117-13128, XP055946013, DOI: 10.1109/CVPR46437.2021.01292 ISBN: 978-1-6654-4509-2 Retrieved from the Internet: URL:https://arxiv.org/pdf/2101.07755.pdf> [retrieved on 2022-07-25] * abstract * * page 2 – page 8 * * page 13 – page 18 * ----- | 1-17 | INV. G06N10/60 |
| A | JOHAN FREDRIKSSON ET AL: "Simultaneous Multiple Rotation Averaging Using Lagrangian Duality", 5 November 2012 (2012-11-05), COMPUTER VISION ACCV 2012, SPRINGER BERLIN HEIDELBERG, BERLIN, HEIDELBERG, PAGE(S) 245 – 258, XP047027068, ISBN: 978-3-642-37430-2 * the whole document * ----- | 1-17 | TECHNICAL FIELDS SEARCHED (IPC) G06N |

The present search report has been drawn up for all claims

| Place of search | Date of completion of the search | Examiner |
|---|---|---|
| The Hague | 26 July 2022 | Tsakonas, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PASTORELLO, DAVIDE ; BLANZIERI, ENRICO.** Quantum annealing learning search for solving QUBO problems. *arXiv:1810.09342,* 2019
- **ANDREA HORNAKOVA et al.** An Efficient Approximate Solver for Lifted Disjoint Paths. *Proceedings of the IEEE/CVF International Conference on Computer Vision (ICCV),* 2021, 11
- **DATE, PRASANNA et al.** Efficiently embedding QUBO problems on adiabatic quantum computers. *Quantum Inf. Process.,* 2019, vol. 18.4, 117
- **JUN CAI et al.** A practical heuristic for finding graph minors. *arXiv:1406.2741,* 2014